# EUROPÄISCHE PATENTSCHRIFT

(11) **EP 4 304 801 B1**
(45) Veröffentlichungstag und Bekanntmachung des Hinweises auf die Patenterteilung: **25.06.2025**
(21) Anmeldenummer: 22702260.5
(22) Anmeldetag: 27.01.2022
(51) Int. Cl.: B23K 26/38, B23K 37/04, B23K 26/03

(54) **VERFAHREN ZUM ERKENNEN EINER STÖRUNG BEI EINEM BEARBEITUNGSPROZESS UND BEARBEITUNGSMASCHINE**
METHOD FOR IDENTIFYING A FAULT IN A MACHINING PROCESS, AND PROCESSING MACHINE
PROCÉDÉ DE DÉTECTION D'UN DÉFAUT LORS D'UN PROCESSUS D'USINAGE ET MACHINE D'USINAGE

(30) Priorität: 11.03.2021 DE 102021202350
(43) Veröffentlichungstag der Anmeldung: 17.01.2024
(73) Patentinhaber: TRUMPF Werkzeugmaschinen SE + Co. KG, 71254 Ditzingen (DE)
(72) Erfinder: MAGG, Winfried, 71254 Ditzingen (DE); REGAARD, Boris, 70499 Stuttgart (DE); SCHINDHELM, David, 70499 Stuttgart (DE); KESSLER, Steffen, 70180 Stuttgart (DE)
(74) Vertreter: Trumpf Patentabteilung
(86) Internationale Anmeldenummer: PCT/EP2022/051898
(87) Internationale Veröffentlichungsnummer: WO 2022/189062

(56) Entgegenhaltungen:
- DE-A1- 10 256 262
- DE-B3- 102014 007 074
- US-A1- 2014 175 071

## Beschreibung

Die vorliegende Erfindung betrifft ein Verfahren zum Erkennen mindestens einer Störung bei einem Bearbeitungsprozess, insbesondere bei einem Schneidprozess, umfassend: Insbesondere schneidendes Bearbeiten eines Werkstücks unter Bewegen eines Bearbeitungswerkzeugs, insbesondere eines Laserbearbeitungskopfs, und des Werkstücks relativ zueinander, Aufnehmen eines Bildes eines zu überwachenden Bereichs an dem Werkstück, der einen Wechselwirkungsbereich des Bearbeitungswerkzeugs mit dem Werkstück umfasst, sowie Auswerten des Bildes des zu überwachenden Bereichs zum Erkennen der mindestens einen Störung des Bearbeitungsprozesses. Die Erfindung betrifft auch eine Bearbeitungsmaschine, umfassend: ein Bearbeitungswerkzeug, insbesondere ein Laserbearbeitungskopf, zur insbesondere schneidenden Bearbeitung eines Werkstücks, eine Bewegungseinrichtung zur Bewegung des Bearbeitungswerkzeugs und des Werkstücks relativ zueinander, eine Bilderfassungseinrichtung zur Aufnahme eines Bildes eines zu überwachenden Bereichs an dem Werkstück, der einen Wechselwirkungsbereich des Bearbeitungswerkzeugs, insbesondere des Laserbearbeitungskopfs, mit dem Werkstück umfasst, sowie eine Auswerteeinrichtung, die konfiguriert ist, anhand der Auswertung des Bildes des zu überwachenden Bereichs mindestens eine Störung des Bearbeitungsprozesses zu erkennen.

Als Störung bei einem Bearbeitungsprozess in Form eines Schneidprozesses mit einem Bearbeitungsstrahl, beispielsweise mit einem Plasma- oder mit einem Laserstrahl, kann z.B. bei einer flächig bearbeitenden Bearbeitungsmaschine in Form einer 2D-Laserschneidmaschine eine Störung in Form eines Schnittabrisses auftreten. Bei einem Schnittabriss schneidet der Bearbeitungsstrahl nicht mehr vollständig durch das (metallische) Werkstück, da die Streckenenergie nicht ausreicht, um das komplette Schnittspaltvolumen aufzuschmelzen.

In der DE 10 2013 209 526 B4 wird vorgeschlagen, zum Erkennen eines Schnittabrisses beim Schneiden mit einem Hochenergiestrahl, insbesondere mit einem Laserstrahl, ein Bild eines zu überwachenden Bereichs des Werkstücks aufzunehmen, der einen Wechselwirkungsbereich des Hochenergiestrahls mit dem Werkstück umfasst. Das Bild wird zur Detektion von Schlackentropfen an einem einer Schneidfront entgegengesetzten Ende des Wechselwirkungsbereichs ausgewertet und der Schnittabriss wird anhand des Auftretens der Schlackentropfen erkannt. Die Schlackentropfen können anhand einer Änderung der Geometrie des Wechselwirkungsbereichs an dessen der Schneidfront entgegengesetztem Ende und/oder anhand des Auftretens eines lokalen Intensitätsminimums des Bildes des der Schneidfront entgegengesetzten Endes des Wechselwirkungsbereichs detektiert werden.

In der WO 2016/181359 A1 ist beschrieben, dass zur Detektion eines kurzzeitigen Schnittabrisses ein Detektor in Form einer Fotodiode verwendet werden kann, der schleppend, d.h. nach hinten in den Schnittspalt blickend, ausgebildet ist und dessen Beobachtungsrichtung unter einem Polarwinkel größer 5° in Bezug auf die optische Achse eines Arbeitslaserstrahls orientiert ist. Dort ist auch beschrieben, dass bei der Erkennung eines Schnittabrisses Pseudofehler auftreten können, weil sich einem durch einen Schnittabriss hervorgerufenen Effekt andere Effekte, wie z.B. erhöhte Schneidgeschwindigkeit oder breiter Schneidspalt, in ähnlicher Größenordnung überlagern können.

Aus der DE 10 2018 217 526 A1 ist ein Verfahren bekannt geworden, bei dem anhand eines überwachten Bereichs an einem Werkstück, der einen Wechselwirkungsbereich eines Bearbeitungsbereichs mit dem Werkstück umfassen kann, mindestens eine Kenngröße für die Prozessqualität des Bearbeitungsprozesses ermittelt wird. Bei dem Verfahren wird mindestens eine positionsabhängige Kenngröße für die Prozessqualität anhand einer Mehrzahl von Messwerten der mindestens einen Kenngröße an derselben Bearbeitungsposition und/oder mindestens eine richtungsabhängige Kenngröße für die Prozessqualität anhand einer Mehrzahl von Messwerten der mindestens einen Kenngröße in derselben Bearbeitungsrichtung ermittelt.

Mit Hilfe des dort beschriebenen Verfahrens können Störpositionsbereiche identifiziert werden, die von der Bearbeitungsposition bzw. von der Position im Arbeitsraum, aber im Wesentlichen nicht von der Geometrie der zu schneidenden Kontur, der Art des Bearbeitungsprozesses (z.B. Brennschneiden oder Schmelzschneiden) und den Bearbeitungsparametern abhängig sind. Als Beispiel für positionsabhängige Störungen werden u.a. im Arbeitsraum angeordnete Auflagestege genannt, die bei einer Verschmutzung durch Schlacke den Bearbeitungsprozess und somit das Schneidergebnis negativ beeinflussen können. Störungen in Form von Fehlschnitten, Schnittabrissen, Schlackenanhaftung, Grat- bzw. Spritzerbildung und ein Ausbrennen der Schnittkanten sind nur einige Beispiele für eine negative Beeinflussung des Schneidprozesses durch verschmutzte Auflagestege.

Aus der DE 10 2017 210 182 A1 ist ein Verfahren bekannt geworden, bei dem der Ist-Zustand einer Quererstreckung einer Auflageleiste mittels einer Erfassungsvorrichtung erfasst wird. Der Ist-Zustand der Auflageleiste kann beispielsweise unter Anwendung eines optischen Verfahrens, d.h. eines Verfahrens der optischen Messtechnik und/oder eines bildgebenden Verfahrens, erfasst werden. Im ersten Fall kann die Auflageleiste zwischen einem optischen Emitter und einem optischen Sensor der Erfassungsvorrichtung angeordnet sein und die Quererstreckung der Auflageleiste kann mittels eines optischen Strahls auf den optischen Sensor abgebildet werden. Im zweiten Fall können die Auflageleiste und eine Kamera der Erfassungsvorrichtung einander gegenüberliegen und mittels der Kamera wird ein Bild der Quererstreckung der Auflageleiste aufgenommen.

Ein Verfahren, bei dem ein Istwert einer Auflageleistenkontur mittels eines optischen Sensors erfasst wird, um eine Werkstückauflage auf das Vorhandensein von zu entfernenden Ablagerungen zu überprüfen, ist in der EP 2 082 813 A1 beschrieben.

Aus der US 2014/175 071 A1 ist ein Verfahren beschrieben, bei dem Helligkeitsprofile von der Werkstückoberfläche mit CMOS-Sensoren im Bereich zwischen 450 nm und 800 nm aufgenommen werden. Diese Profile werden mit Modellen verglichen, um daraus auf die Bearbeitungsqualität zu schließen.

### Aufgabe der Erfindung

Der Erfindung liegt die Aufgabe zugrunde, ein Verfahren und eine Bearbeitungsmaschine zum zuverlässigen Erkennen von Störungen bei einem Bearbeitungsprozess bereitzustellen.

### Gegenstand der Erfindung

Diese Aufgabe wird erfindungsgemäß durch ein Verfahren der eingangs genannten Art gelöst, welches dadurch gekennzeichnet ist, dass zum Erkennen der Störung beim Auswerten des Bildes das Vorhandensein oder das Fehlen eines lokalen Intensitätsabfalls eines Intensitätsverlaufs innerhalb des Wechselwirkungsbereichs entlang einer Vorschubrichtung des Bearbeitungsprozesses detektiert wird und dass das Detektieren des lokalen Intensitätsabfalls an einer Bearbeitungsposition einer positionsabhängigen Störung des Bearbeitungsprozesses an der Bearbeitungsposition zugeordnet wird.

Während des Bearbeitungsprozesses, z.B. während des Laserschneidens, wird ein Bild des Wechselwirkungsbereichs (Prozessemissionszone bzw. Prozessleuchten) mittels einer bildgebenden Sensorik bzw. Bilderfassungseinrichtung in Echtzeit erfasst (z.B. mit einer Frequenz von mehr als 400 Hz) und mit Hilfe von geeigneten Bildverarbeitungsalgorithmen in Echtzeit ausgewertet, um Merkmale des Wechselwirkungsbereichs zu extrahieren bzw. zu analysieren, die das Erkennen von Störungen bei dem Bearbeitungsprozess ermöglichen.

Wesentlich beim Erkennen von Störungen anhand von Merkmalen, die bei der Auswertung des Bildes des Wechselwirkungsbereichs extrahiert werden, ist eine Plausibilitätsprüfung, um das Vorliegen einer Störung bzw. die Art einer Störung prozesssicher erkennen zu können. Es hat sich gezeigt, dass bei der Erkennung einer Störung des Bearbeitungsprozesses in Form eines Schnittabrisses allein anhand von geometrischen Merkmalen des Wechselwirkungsbereichs, beispielsweise anhand der Länge des Wechselwirkungsbereichs, nicht eindeutig zwischen einem realen Schnittabriss und einem Pseudo-Schnittabriss unterschieden werden kann. Ein solcher Pseudo-Schnittabriss kann auftreten, wenn während des Schneidprozesses andere Störungen auftreten, die beispielsweise durch Auflagestege einer Werkstücklagerung oder durch die Art des Werkstücks (z.B. ein Doppelblech) hervorgerufen werden, welche die geometrischen Merkmale des Wechselwirkungsbereichs auf dieselbe Weise verändern, wie dies bei einem Schnittabriss der Fall wäre.

In diesen Fällen, d.h. bei einem "gestörten" Schneidprozess, kann anhand von Geometriemerkmalen des Wechselwirkungsbereichs allein in der Regel keine prozesssichere Erkennung eines Schnittabrisses erfolgen, d.h. es wird ggf. ein Schnittabriss erkannt, obwohl bei dem Schneidprozess kein Schnittabriss aufgetreten ist. Die Unterscheidung, ob ein Schnittabriss vorliegt oder nicht, kann jedoch anhand des Intensitätsverlaufs des Wechselwirkungsbereichs entlang der Vorschub- bzw. Schneidrichtung, d.h. entlang der Richtung der momentanen Relativbewegung zwischen dem Werkstück und dem Bearbeitungswerkzeug, getroffen werden. Für die Erkennung des Schnittabrisses wird jedoch in der Regel zusätzlich ein weiteres geometrisches Merkmal des Wechselwirkungsbereichs benötigt, wie weiter unten näher beschrieben ist.

Der lokale Intensitätsabfall des Intensitätsverlaufs tritt üblicherweise im Bereich des eigentlich zu erwartenden (nominellen) Endes der Schneidfront bzw. des Wechselwirkungsbereichs bei einem ungestörten Schneidprozess auf. Für den Fall, dass ein Schnittabriss vorliegt, ist die Länge des Wechselwirkungsbereichs in Vorschubrichtung jedoch verlängert, so dass der lokale Intensitätsabfall nicht am Ende des Wechselwirkungsbereichs, sondern innerhalb des Wechselwirkungsbereichs auftritt, d.h. sowohl vor als auch nach dem Intensitätsabfall bzw. einem lokalen Intensitätsminimum ist entlang der Vorschubrichtung die Intensität gegenüber dem lokalen Intensitätsminimum erhöht.

Das Vorhandensein eines lokalen Intensitätsabfalls kann beispielsweise detektiert werden, wenn der Intensitätsverlauf innerhalb des Wechselwirkungsbereichs ein lokales Minimum aufweist, dessen Intensitätswert unter einem vorgegebenen prozentualen Anteil, z.B. unter 80%, eines maximalen Intensitätswerts innerhalb des Wechselwirkungsbereichs liegt. In Vorschubrichtung vor und in Vorschubrichtung nach dem lokalen Intensitätsminimum steigt der Intensitätswert des Intensitätsverlaufs an, bis der Intensitätsverlauf am vorderen bzw. am hinteren Ende des Wechselwirkungsbereichs steil abfällt. Der prozentuale Anteil des maximalen Intensitätswerts, bei dem ein lokaler Intensitätsabfall detektiert wird, ist nicht zwingend vorbestimmt, sondern kann ggf. in Abhängigkeit vom momentanen Arbeitspunkt festgelegt werden.

Für die Detektion des Vorliegens bzw. des Fehlens eines lokalen Intensitätsabfalls können ggf. alternativ oder zusätzlich weitere Kriterien verwendet werden. Beispielsweise kann die Detektion des Vorliegens oder des Fehlens des lokalen Intensitätsabfalls anhand eines Gradienten des Intensitätsverlaufs erfolgen, d.h. anhand der Ableitung des Intensitätsverlaufs entlang der Vorschubrichtung. Der Gradient des Intensitätsverlaufs weist bei einem lokalen Minimum des Intensitätsverlaufs innerhalb des Wechselwirkungsbereichs einen Nulldurchgang auf, bei dem der Gradient von negativen Werten zu positiven Werten ansteigt. Der Nulldurchgang des Gradienten liegt zwischen einem lokalen Minimum und einem lokalen Maximum des Gradienten. Anhand des Verlaufs des Gradienten, beispielsweise anhand des Absolutwerts des lokalen Minimums bzw. des lokalen Maximums, welcher ein Maß für die Steilheit des lokalen Intensitätsabfalls darstellt, kann der lokale Intensitätsabfall ebenfalls detektiert werden. Beispielsweise kann zu diesem Zweck der Absolutwert des Gradienten am Ort des lokalen Minimums bzw. des lokalen Maximums oder der Anstieg des Gradienten vom lokalen Minimum zum lokalen Maximum herangezogen und mit einem Schwellwert verglichen werden.

Bei einer Variante wird ein Schnittabriss als Störung beim schneidenden Bearbeiten des Werkstücks nur für den Fall erkannt, dass das Fehlen des lokalen Intensitätsabfalls innerhalb des Wechselwirkungsbereichs detektiert wird. Hierbei wird ausgenutzt, dass bei einem realen Schnittabriss der Intensitätsverlauf entlang der Schneidrichtung keinen lokalen Intensitätsabfall ("Unstetigkeit") und somit auch kein bzw. nur ein geringfügig von einem maximalen Intensitätswert abweichendes lokales Intensitätsminium aufweist, während dies bei einer Störung in Form eines Auflagestegs oder beim Vorhandensein eines Doppelblechs typischerweise der Fall ist, da eine solche "Störung" im Materialfluss eine geringere Prozessemission an einer jeweiligen Stelle des Wechselwirkungsbereichs erzeugt. Anhand des Intensitätsverlaufs innerhalb des Wechselwirkungsbereichs kann daher eine Unterscheidung zwischen einem realen Schnittabriss und einem Pseudo-Schnittabriss getroffen werden.

Bei einer Variante wird zum Erkennen der Störung beim Auswerten des Bildes mindestens ein Geometriemerkmal des Wechselwirkungsbereichs, insbesondere eine Länge des Wechselwirkungsbereichs entlang der Vorschubrichtung, detektiert bzw. durch eine Bildanalyse bestimmt. Wie weiter oben beschrieben wurde, können Geometriemerkmale des Wechselwirkungsbereichs zum Erkennen von Störungen bei dem Bearbeitungsprozess, insbesondere einer Störung in Form eines Schnittabrisses, herangezogen werden. Die Geometriemerkmale können hierbei mit anderen Merkmalen des Wechselwirkungsbereichs, beispielsweise mit der Intensität bzw. mit dem Intensitätsverlauf in dem Wechselwirkungsbereich bzw. in einer Prozesslicht-Region-of Interest (s.u.) kombiniert werden, um eine jeweilige Störung zu erkennen.

Bei einer Weiterbildung dieser Variante wird ein Schnittabriss beim schneidenden Bearbeiten erkannt, wenn eine von Länge des Wechselwirkungsbereichs abhängige Kenngröße einen Schwellwert überschreitet, und wenn das Fehlen des lokalen Intensitätsabfalls innerhalb des Wechselwirkungsbereichs detektiert wird.

Bei der von der Länge des Wechselwirkungsbereichs abhängigen Kenngröße handelt es sich um eine Funktion, die von der Länge des Wechselwirkungsbereichs abhängig ist. Im einfachsten Fall handelt es sich bei der Kenngröße um die Länge des Wechselwirkungsbereichs selbst. Es ist auch möglich, dass es sich bei der Kenngröße um eine zur Länge des Wechselwirkungsbereichs proportionale Größe handelt, d.h. die Länge des Wechselwirkungsbereichs wird mit einem Gewichtungsfaktor multipliziert. Es ist aber auch möglich, dass eine kompliziertere Abhängigkeit zwischen der Kenngröße und der Länge des Wechselwirkungsbereichs besteht. Neben der Länge des Wechselwirkungsbereichs können in die Kenngröße andere Parameter des aufgenommenen Bildes eingehen, beispielsweise eine (mittlere) Intensität des aufgenommenen Bildes oder eines Teilbereichs des aufgenommenen Bildes, die Breite des Wechselwirkungsbereichs, etc.

Bei dem Schwellwert kann es sich um einen Absolutwert handeln, es ist aber auch möglich, dass es sich bei dem Schwellwert um eine prozentuale Änderung eines aktuellen/definierten Arbeitspunktes der Kenngröße handelt. In diesem Fall wird die anhand des Bildes bestimmte Kenngröße in Beziehung zu einer aktuell vorgegebenen Kenngröße gesetzt. Zu diesem Zweck kann beispielsweise ein Quotient aus der anhand des Bildes bestimmten Kenngröße und der Kenngröße am Arbeitspunkt gebildet werden. Der Quotient wird in diesem Fall mit dem Schwellwert verglichen.

Für die Erkennung eines Schnittabrisses müssen in diesem Fall zwei Kriterien erfüllt sein: Einerseits muss die Kenngröße einen vorgegebenen Schwellwert (Schnittabrissschwelle) überschreiten, und andererseits muss das Kriterium erfüllt sein, dass im Intensitätsverlauf innerhalb des Wechselwirkungsbereichs kein lokaler Intensitätsabfall auftritt. Für den Fall, dass beide Kriterien über eine vorgegebene (kurze) Wegstrecke, z.B. in der Größenordnung von ca. 10 mm, in den jeweils aufgenommenen Bildern des Wechselwirkungsbereichs erfüllt sind, liegt ein Schnittabriss vor. In diesem Fall kann in den Bearbeitungsprozess eingegriffen werden, beispielsweise kann ein Vorschub-Halt ausgelöst werden, oder es kann eine Information/Warnung/Fehlermeldung erzeugt bzw. ausgegeben werden.

Für die Berechnung der Kenngröße wird die exakte Ausprägung der Länge des Wechselwirkungsbereichs, d.h. der Prozesszone des Prozessleuchtens, ermittelt. Nachfolgend wird die Größe der Prozesslicht-Region-of-Interest mit Hilfe der Daten aus der Prozesszone bzw. dem zu überwachenden Bereich festgelegt. Die Ausprägung der Prozesslicht-Region-of-Interest reicht typischerweise - bei einer Aufnahme des Bildes durch eine Bearbeitungsdüse hindurch - in Vorschubrichtung bis an den Düsenrand und erstreckt sich quer zur Vorschubrichtung über die gesamte Breite des Wechselwirkungsbereichs. Die Länge des Wechselwirkungsbereichs wird beispielsweise durch einen Vergleich der Intensität mit einem Intensitätsschwellwert bestimmt, oder durch eine Auswertung des Intensitäts-Gradienten. Der Intensitätsschwellwert bei der Längenmessung kann beispielsweise in Form eines Quotienten aus der mittleren Intensität der Prozesslicht-Region-of-Interest (s.o.) und einem Gewichtungsfaktor berechnet werden.

Die für die Bilderfassungseinrichtung, beispielsweise in Form einer Kamera, sichtbare Ausprägung der Schneidfront bzw. des Wechselwirkungsbereichs (Prozessemission) ist in der Regel bis zur Unterseite des Werkstücks detektierbar. Eine Veränderung (Verlängerung) des Wechselwirkungsbereichs wird durch Störungen des Schneidprozesses, wie Vorschub, Fokuslage, Gasdruck, Verschmutzung der Optik, Auflagestege, ein Werkstück in Form eines Doppelblechs, etc. hervorgerufen. Im realen Schneidbetrieb sind überwiegend Auflagestege, seltener Doppelbleche, für eine wesentliche Veränderung der Schneidfront bzw. des Wechselwirkungsbereichs, insbesondere von dessen Länge in Vorschubrichtung, verantwortlich.

Wie weiter oben beschrieben wurde, verändert sich beim Auftreten dieser Störungen die Kenngröße in einer Größenordnung, die der Veränderung bei einem realen Schnittabriss entspricht. Eine Unterscheidung zwischen einem realen Schnittabriss und einem Pseudo-Schnittabriss nur anhand der Kenngröße ist daher nicht möglich. Erst durch eine Plausibilisierung anhand der Überprüfung, ob im Intensitätsverlauf ein lokaler Intensitätsabfall auftritt oder nicht, sowie durch eine zeitliche bzw. wegstreckenabhängige Betrachtung wird eine zuverlässige Erkennung eines Schnittabrisses ermöglicht. Ein Schnittabriss wird typischerweise erst erkannt, wenn beide Kriterien über eine vorgegebene Wegstrecke erfüllt sind.

Bei einer weiteren Variante wird das insbesondere mehrmalige Detektieren des lokalen Intensitätsabfalls an einer Bearbeitungsposition einem Vorhandensein eines Auflagestegs an der Bearbeitungsposition zugeordnet. Wie weiter oben beschrieben wurde, können insbesondere verschmutzte Auflagestege eine positionsabhängige Störung darstellen, die den Bearbeitungsprozess, speziell den Schneidprozess, negativ beeinflussen. Sind die Bearbeitungspositionen der Auflagestege oder von anderen positionsabhängigen Störungen bekannt, können diese für den Bearbeitungsprozess, z.B. für die zu schneidenden Teile bzw. Konturen, entsprechend berücksichtigt werden.

Um die Bearbeitungspositionen aufzufinden, an denen positionsabhängige Störungen z.B. durch Auflagestege auftreten, wird das Auftreten einer Störung in Form eines lokalen Intensitätsabfalls in dem Intensitätsverlauf des Wechselwirkungsbereichs einer aktuellen Bearbeitungsposition in Maschinenkoordinaten (X/Y/Z) zugeordnet. Anhand dieser Koordinaten können positionsabhängige Störungen wie Auflagestege bzw. Hotspots an einzelnen Positionen der Auflagestege, im Arbeitsraum der Bearbeitungsmaschine exakt ermittelt und ggf. klassifiziert werden, wie nachfolgend beschrieben wird.

Bei einer Weiterbildung wird anhand des Intensitätsverlaufs, insbesondere anhand eines Gradienten des Intensitätsverlaufs, ein Grad der positionsabhängigen Störung, insbesondere ein (lokaler) Verschmutzungsgrad des Auflagestegs, bestimmt. Anhand des Gradienten des Intensitätsverlaufs im Bereich des lokalen Intensitätsabfalls kann auf die Ausprägung, d.h. die Größe, der positionsabhängigen Störung geschlossen werden. Beispielsweise kann ein Verschmutzungsgrad eines Auflagesteges anhand des Absolutbetrages eines lokalen Minimums bzw. eines lokalen Maximums des Gradienten des Intensitätsverlaufs im Bereich des lokalen Intensitätsabfalls bestimmt werden. Grundsätzlich gilt, dass ein betragsmäßig kleineres lokales Minimum bzw. lokales Maximum des Gradienten einem größeren Verschmutzungsgrad des Auflagesteges zugeordnet werden kann, und umgekehrt. Alternativ oder zusätzlich kann der Grad der positionsabhängigen Störung auch anhand der Größe des lokalen Intensitätsabfalls im Intensitätsverlauf des aufgenommenen Bildes bestimmt werden. Grundsätzlich gilt, dass ein betragsmäßig größerer Intensitätsabfall einem geringeren (lokalen) Verschmutzungsgrad des Auflagestegs an der Bearbeitungsposition zugeordnet werden kann, und umgekehrt.

Der Verschmutzungsgrad des Auflagestegs beeinflusst den Grad der Störung des Bearbeitungsprozesses: Ein "neuer", nur leicht verschlackter bzw. verschmutzter Auflagesteg an einer bestimmten Bearbeitungsposition hat nur einen geringen Einfluss auf den Schneidprozess, während ein "alter", stark verschmutzter Auflagesteg an einer bestimmten Bearbeitungsposition einen kritischen Einfluss auf den Bearbeitungsprozess haben kann.

Die Größe bzw. der Grad der positionsabhängigen Störung kann dazu genutzt werden, um den Bearbeitungsprozess, beispielsweise einen Schneidprozess, genauer gesagt das Schneidprogramm des Schneidprozesses, anzupassen, um die positionsabhängige Störgröße bzw. den Grad der Störung entsprechend zu berücksichtigen, bzw. um Änderungen im Ablauf oder in der Ansteuerung bei dem Bearbeitungsprozess vorzunehmen. Beispielsweise kann in Abhängigkeit vom Grad der positionsabhängigen Störung(en) eine (Neu-)Schachtelung der zu schneidenden Werkstückteile auf dem Werkstück, eine Anpassung der Auftragsplanung, ggf. der Austausch von stark verschmutzten Auflagestegen, etc. durchgeführt werden. Es versteht sich, dass die Informationen über den Grad der Störung bzw. den Verschmutzungsgrad auch für den Anwender entsprechend formuliert bzw. angezeigt werden können.

Auch anhand von weiteren Merkmalen der Wechselwirkungszone, beispielsweise anhand von deren Breite und/oder Länge, kann eine Klassifizierung der Art der Störung vorgenommen werden. Auch kann die Ausprägung, d.h. die Größe bzw. der Grad der Störung, ermittelt werden. Zu diesem Zweck kann die örtliche Ausprägung und Verlaufsform der Störung während des Schneidprozesses und/oder deren Historie, z.B. durch mehrmaliges Überschneiden bzw. Überfahren ein- und derselben Bearbeitungsposition, erfasst werden. Zusätzlich oder alternativ zu positionsabhängigen Störungen können durch die Auswertung des Bildes des Wechselwirkungsbereichs bzw. einer zeitlichen Folge von Bildern auch von der Bearbeitungsrichtung abhängige Störungen erkannt und deren Art bzw. deren Ausprägung ermittelt werden, wie dies beispielsweise in der eingangs zitierten DE 10 2018 217 526 A1 beschrieben ist, welche durch Bezugnahme in ihrer Gesamtheit zum Inhalt dieser Anmeldung gemacht wird.

Bei einer weiteren Variante wird anhand der Auswertung einer Mehrzahl von zeitlich aufeinander folgenden Bildern des Wechselwirkungsbereichs auf die Art der Störung des Bearbeitungsprozesses geschlossen. Wie weiter oben beschrieben wurde, ist die Trajektorie bei der Bearbeitung und somit die momentane Bearbeitungsposition relativ zum Arbeitsraum bekannt. Dies ermöglicht eine Zuordnung der aufgenommenen Bilder zu den Bearbeitungspositionen bzw. zum Arbeitsraum.

Die Auflagestege sind typischerweise in dem Arbeitsraum an vorgegebenen Koordinaten in einer ersten Richtung (z.B. X-Richtung) angeordnet und erstrecken sich in einer zweiten Richtung (Y-Richtung). Eine wiederkehrende oder - bei extrem verschlackten Stegen - ggf. konstante Störung in Y-Richtung ist somit an bestimmten Positionen in X-Richtung gegeben. In X-Richtung sind die Störungen demgegenüber in der Regel lokal begrenzt, und zwar auf die Erstreckung des Auflagesteges in X-Richtung. Durch die Auswertung einer Mehrzahl von aufeinander folgenden Bildern kann daher auf eine positionsabhängige Störung des Bearbeitungsprozesses in Form eine Auflagestegs geschlossen werden.

Auch orts- und richtungsabhängige Störungen im Arbeitsraum, die für ein Doppelblech charakteristisch sind, können anhand einer Mehrzahl von Bildern des Wechselwirkungsbereichs bestimmt werden, die einer jeweiligen Bearbeitungsposition und Bearbeitungsrichtung bei der Bewegung entlang der Bahntrajektorie zugeordnet werden. Auf diese Weise kann z.B. auf eine Störung Form eines Doppelblechs geschlossen werden.

Ein weiterer Aspekt der Erfindung betrifft eine Bearbeitungsmaschine der eingangs genannten Art, bei welcher die Auswerteeinrichtung konfiguriert ist, zum Erkennen der Störung beim Auswerten des Bildes das Vorhandensein oder das Fehlen eines lokalen Intensitätsabfalls eines Intensitätsverlaufs innerhalb des Wechselwirkungsbereichs entlang einer Vorschubrichtung des Bearbeitungsprozesses zu detektieren und ferner konfiguriert ist, dass Detektieren des lokalen Intensitätsabfalls an einer Bearbeitungsposition einer positionsabhängigen Störung des Bearbeitungsprozesses an der Bearbeitungsposition zuzuordnen. Wird bei dem Bearbeitungsprozess momentan ein Auflagesteg oder ein Doppelblech überfahren, tritt ein lokaler Intensitätsabfall in dem ansonsten innerhalb des Wechselwirkungsbereichs im Wesentlichen konstanten Intensitätsverlauf auf.

Ein lokaler Intensitätsabfall kann beispielsweise detektiert werden, wenn der Intensitätsverlauf innerhalb des Wechselwirkungsbereichs ein lokales Minimum aufweist, dessen Intensitätswert unter einem vorgegebenen prozentualen Anteil, z.B. unters 80%, eines maximalen Intensitätswerts innerhalb des Wechselwirkungsbereichs liegt. In Vorschubrichtung vor und in Vorschubrichtung nach dem lokalen Intensitätsminimum steigt der Intensitätswert des Intensitätsverlaufs an, bis der Intensitätsverlauf am vorderen bzw. am hinteren Ende des Wechselwirkungsbereichs steil abfällt.

Alternativ oder zusätzlich kann das Vorliegen oder das Fehlen eines lokalen Intensitätsabfalls auch anhand des Gradienten des Intensitätsverlaufs detektiert werden. Wie weiter oben beschrieben wurde, kann zu diesem Zweck beispielsweise der Absolutwert des Gradienten am Ort eines lokalen Minimums bzw. eines lokalen Maximums innerhalb des Wechselwirkungsbereichs oder der Anstieg des Gradienten vom lokalen Minimum zum lokalen Maximum herangezogen und mit einem Schwellwert verglichen werden.

Bei einer Ausführungsform ist die Auswerteeinrichtung ausgebildet, ein Schnittabriss als Störung beim schneidenden Bearbeiten des Werkstücks nur für den Fall zu erkennen, dass das Fehlen des lokalen Intensitätsabfalls innerhalb des Wechselwirkungsbereichs detektiert wird. Ist kein lokaler Intensitätsabfall vorhanden, wird typischerweise kein Auflagesteg überfahren bzw. es liegt kein Doppelblech vor, d.h. der Schneidprozess wird nicht durch diese Störgrößen beeinflusst. In diesem Fall kann allein anhand eines geometrischen Kriteriums bzw. anhand von Geometriemerkmalen des Wechselwirkungsbereichs auf das Vorliegen eines Schnittabrisses geschlossen werden.

Bei einer weiteren Ausführungsform ist die Auswerteeinrichtung konfiguriert, zum Erkennen der Störung beim Auswerten des Bildes mindestens ein Geometriemerkmal des Wechselwirkungsbereichs, insbesondere eine Länge des Wechselwirkungsbereichs entlang der Vorschubrichtung, zu detektieren. Wie weiter oben beschrieben wurde, kann u.a. anhand von Geometriemerkmalen des Wechselwirkungsbereichs die Art einer Störung erkannt werden, d.h. die Störung kann klassifiziert werden. Beispielsweise kann anhand der Länge des Wechselwirkungsbereichs in Vorschubrichtung erkannt werden, dass kein Schnittabriss vorliegt, wenn ein vorgegebenes Schnittabrisskriterium nicht erfüllt ist.

Bei einer Weiterbildung ist die Auswerteeinrichtung konfiguriert, einen Schnittabriss beim schneidenden Bearbeiten zu erkennen, wenn eine von der Länge des Wechselwirkungsbereichs abhängige Kenngröße einen Schwellwert überschreitet und wenn das Fehlen des lokalen Intensitätsabfalls innerhalb des Wechselwirkungsbereichs detektiert wird. Für das prozesssichere Erkennen eines Schnittabrisses ist es erforderlich, dass beide Kriterien erfüllt sind, d.h. einerseits muss die Kenngröße einen vorgegebenen Schwellwert überschreiten und andererseits darf kein lokaler Intensitätsabfall innerhalb des Wechselwirkungsbereichs detektiert werden.

Bei einer weiteren Ausführungsform ist die Auswerteeinrichtung konfiguriert, das insbesondere mehrmalige Detektieren des lokalen Intensitätsabfalls an einer Bearbeitungsposition einem Vorhandensein eines Auflagestegs, an der Bearbeitungsposition zuzuordnen. Für den Fall, das ein lokaler Intensitätsabfall an ein- und derselben Bearbeitungsposition - bei der Bearbeitung unterschiedlicher Werkstücke - mindestens zwei Mal oder mehr als zwei Mal auftritt, ist es sehr wahrscheinlich, dass an dieser Bearbeitungsposition ein Auflagesteg vorhanden ist, d.h. eine Störung in Form eines Doppelblechs kann praktisch ausgeschlossen werden. Auf diese Weise kann eine Störung in Form eines stark verschmutzten Auflagestegs prozesssicher von einer Störung in Form eines Doppelblechs unterschieden werden.

Bei einer weiteren Ausführungsform ist die Auswerteeinrichtung konfiguriert, anhand des Intensitätsverlaufs, insbesondere anhand eines Gradienten des Intensitätsverlaufs, einen Grad der positionsabhängigen Störung, insbesondere einen Verschmutzungsgrad des Auflagestegs, zu bestimmen. Wie weiter oben beschrieben wurde, liegt bei einem vergleichsweise kleinen Absolutwert des lokalen Minimums bzw. des lokalen Maximums des Gradienten im Bereich der positionsabhängigen Störung ein stark verschmutzter Auflagesteg bzw. ein Doppelblech vor. Ist der Absolutwert des lokalen Minimums bzw. des lokalen Maximums des Gradienten vergleichsweise groß, deutet dies auf das Vorliegen eines nahezu nicht verschmutzten Auflagesteges hin, der den Schneidprozess nur geringfügig beeinflusst. Es versteht sich, dass der Gradient des Intensitätsverlaufs auch auf andere Weise ausgewertet werden kann, um auf den Grad der positionsabhängigen Störung zu schließen. Auch der Intensitätsverlauf selbst kann zu diesem Zweck ausgewertet werden, beispielsweise indem der Absolutwert des lokalen Intensitätsabfalls, d.h. die Differenz aus dem maximalen Intensitätswert in dem Wechselwirkungsbereich um dem Intensitätswert des lokalen Intensitätsminimums bestimmt wird.

Bei einer weiteren Ausführungsform ist die Auswerteeinrichtung konfiguriert, anhand der Auswertung einer Mehrzahl von zeitlich aufeinander folgenden Bildern des Wechselwirkungsbereichs auf die Art der Störung des Bearbeitungsprozesses zu schließen. Wie weiter oben beschrieben wurde, können als Arten von Störungen beispielsweise Auflagestege oder das Vorhandensein eines Doppelblechs erkannt bzw. voneinander unterschieden werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Laserbearbeitungsmaschine zur Durchführung eines Laserschneidprozesses,
- Fig. 2: eine schematische Darstellung einer Vorrichtung zur Überwachung des Laserschneidprozesses durch Aufnahme eines Bildes eines zu überwachenden Bereichs des Werkstücks, der einen Wechselwirkungsbereich enthält,
- Fig. 3a-c: schematische Darstellungen von Bildern des Wechselwirkungsbereichs sowie eines Intensitätsverlaufs entlang des Wechselwirkungsbereichs bei einem ungestörten Schneidprozess, bei einem Schnittabriss und beim Überfahren eines Auflagestegs, sowie
- Fig. 4a,b: schematische Darstellungen analog zu Fig. 3a-c beim Überfahren eines stark verschmutzten bzw. eines fast neuen Auflagestegs.

In der folgenden Beschreibung der Zeichnungen werden für gleiche bzw. funktionsgleiche Bauteile identische Bezugszeichen verwendet.

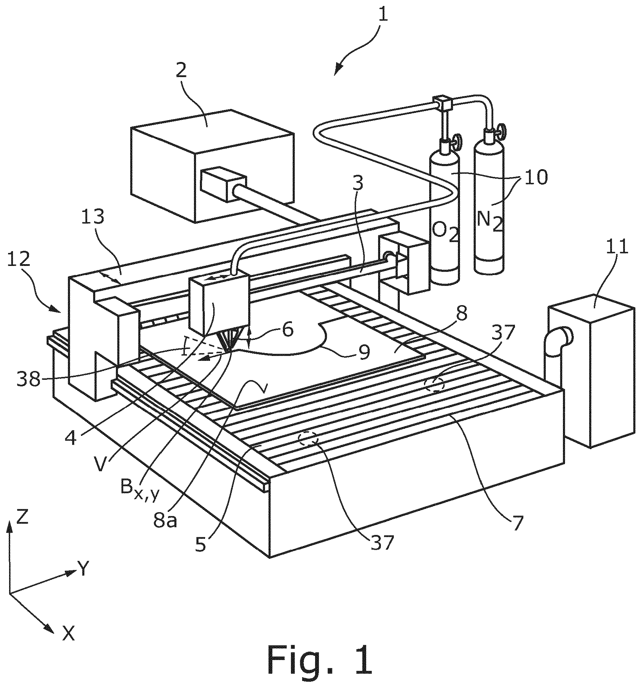

**Fig. 1** zeigt eine Bearbeitungsmaschine in Form einer Laserbearbeitungsmaschine 1 mit einer Laserquelle 2, einem Laserbearbeitungskopf 4 und einer Werkstückauflage 5. Ein von der Laserquelle 2 erzeugter Laserstrahl 6 wird mittels einer Strahlführung 3 mit Hilfe von (nicht gezeigten) Umlenkspiegeln zum Laserbearbeitungskopf 4 geführt und in diesem fokussiert sowie mit Hilfe von ebenfalls nicht bildlich dargestellten Spiegeln senkrecht zur Oberfläche 8a eines Werkstücks 8 ausgerichtet, d.h. die Strahlachse (optische Achse) des Laserstrahls 6 verläuft senkrecht zum Werkstück 8. Im gezeigten Beispiel handelt es sich bei der Laserquelle 2 um eine CO₂-Laserquelle. Alternativ kann der Laserstrahl 6 beispielsweise durch einen Festkörperlaser erzeugt werden.

Zum Laserschneiden des Werkstücks 8 wird mit dem Laserstrahl 6 zunächst eingestochen, d.h. das Werkstück 8 wird an einer Stelle punktförmig aufgeschmolzen oder oxidiert und die hierbei entstehende Schmelze wird ausgeblasen. Nachfolgend wird der Laserstrahl 6 über das Werkstück 8 bewegt, so dass eine durchgängige Schnittfuge 9 entsteht, an der entlang der Laserstrahl 6 das Werkstück 8 durchtrennt.

Sowohl das Einstechen als auch das Laserschneiden können durch Hinzufügen eines Gases unterstützt werden. Als Schneidgase 10 können Sauerstoff, Stickstoff, Druckluft und/oder anwendungsspezifische Gase eingesetzt werden. Entstehende Partikel und Gase können mithilfe einer Absaugeinrichtung 11 aus einer nicht bildlich dargestellten Absaugkammer abgesaugt werden, die sich unterhalb der Werkstückauflage 5 befindet.

Die Laserbearbeitungsmaschine 1 umfasst auch eine Bewegungseinrichtung 12 zur Bewegung des Laserbearbeitungskopfs 4 und des Werkstücks 8 relativ zueinander. Im gezeigten Beispiel ruht das Werkstück 8 während der Bearbeitung auf der Werkstückauflage 5 und der Laserbearbeitungskopf 4 wird bei der Bearbeitung entlang von zwei Achsen X, Y eines XYZ-Koordinatensystems bewegt. Zu diesem Zweck weist die Bewegungseinrichtung 12 ein mit Hilfe eines durch einen Doppelpfeil angedeuteten Antriebs in X-Richtung verschiebbares Portal 13 auf. Der Laserbearbeitungskopf 4 kann mit Hilfe eines weiteren durch einen Doppelpfeil angedeuteten Antriebs der Bewegungseinrichtung 12 in X-Richtung verschoben werden, um an beliebige Bearbeitungspositionen B_{X,Y} in X-Richtung und in Y-Richtung in einem durch die Verschiebbarkeit des Laserbearbeitungskopfs 4 bzw. durch das Werkstück 8 vorgegebenen Arbeitsfeld bewegt zu werden. An einer jeweiligen Bearbeitungsposition B_{X,Y} weist der Laserstrahl 6 eine (instantane) Vorschubrichtung V auf, die der (instantanen) Relativgeschwindigkeit zwischen dem Laserbearbeitungskopf 4 und dem Werkstück 8 entspricht.

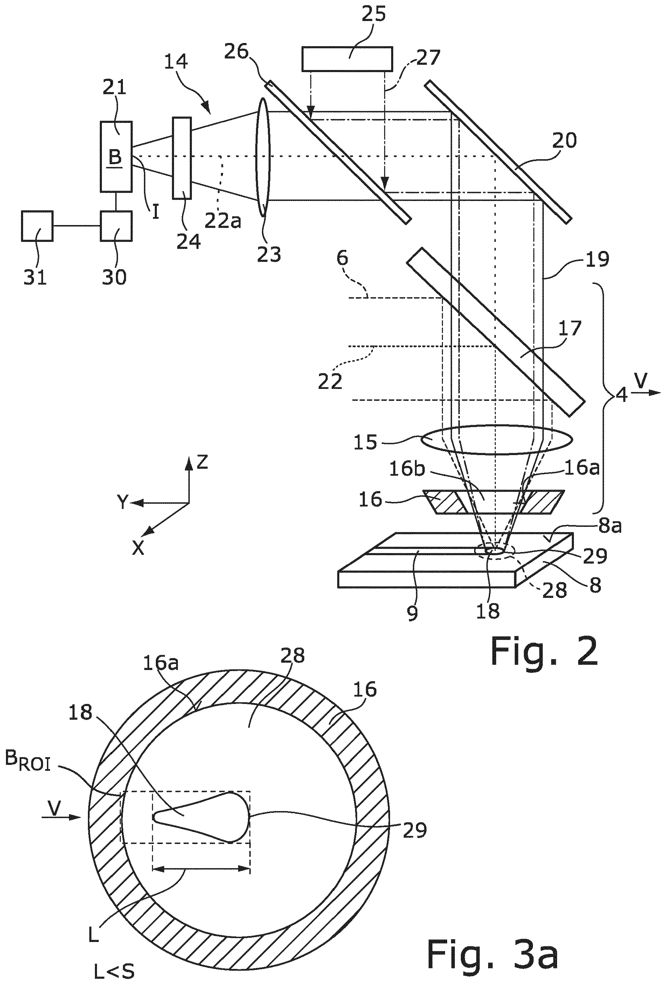

**Fig. 2** zeigt einen beispielhaften Aufbau einer Vorrichtung 14 zur Prozessüberwachung und -regelung eines Laserschneidprozesses an dem Werkstück 8 mittels der Laserbearbeitungsmaschine 1 von Fig. 1, von der nur stark schematisch der Laserbearbeitungskopf 4 mit einer Fokussierlinse 15 aus Zinkselenid zur Fokussierung des Laserstrahls 6 der Laserbearbeitungsmaschine 1, einer Schneidgas-Düse 16 sowie mit einem Umlenkspiegel 17 dargestellt ist. Im vorliegenden Fall ist der Umlenkspiegel 17 teildurchlässig ausgebildet und bildet ein eintrittsseitiges Bauteil für die Vorrichtung 14 zur Prozessüberwachung.

Der Umlenkspiegel 17 reflektiert den einfallenden Laserstrahl 6 (mit einer Wellenlänge von ca. 10 µm) und transmittiert für die Prozessüberwachung relevante, vom Werkstück 2 reflektierte sowie von einem Wechselwirkungsbereich 18 des Laserstrahls 5 mit dem Werkstück 2 emittierte Strahlung 19 in einem Wellenlängenbereich, der im vorliegenden Beispiel zwischen ca. 550 nm und 2000 nm liegt. Alternativ zum teildurchlässigen Umlenkspiegel 17 kann auch ein Scraperspiegel oder ein Lochspiegel eingesetzt werden, um die Prozessstrahlung 19 der Vorrichtung 14 zuzuführen.

In der Vorrichtung 14 ist hinter dem teildurchlässigen Spiegel 17 ein weiterer Umlenkspiegel 20 angeordnet, welcher die Prozessstrahlung 19 auf eine geometrisch hochauflösende Kamera 21 als Bilderfassungseinheit umlenkt. Bei der Kamera 21 kann es sich um eine Hochgeschwindigkeitskamera handeln, die koaxial zur Laserstrahlachse 22 bzw. zur Verlängerung der Laserstrahlachse 22a und somit richtungsunabhängig angeordnet ist. Prinzipiell ergibt sich die Möglichkeit der Aufnahme des Bildes durch die Kamera 21 auch im Auflichtverfahren im VIS-Wellenlängenbereich, ggf. auch im NIR-Wellenlängenbereich, sofern eine zusätzliche in diesem Wellenlängenbereich strahlende Beleuchtungsquelle vorgesehen ist, sowie alternativ die Aufnahme des Prozesseigenleuchtens in den Wellenlängenbereichen UV und NIR/IR.

Für die Abbildung ist im vorliegenden Beispiel zwischen dem teildurchlässigen Spiegel 17 und der Kamera 21 ein in Fig. 2 als Linse dargestelltes abbildendes, fokussierendes optisches System 23 vorgesehen, welches die für die Prozessüberwachung relevante Strahlung 19 auf die Kamera 21 fokussiert. Bei dem in Fig. 2 gezeigten Beispiel ist ein Filter 24 vor der Kamera 21 von Vorteil, wenn weitere Strahlungs- bzw. Wellenlängenanteile von der Erfassung mit der Kamera 21 ausgeschlossen werden sollen. Der Filter 24 kann z.B. als schmalbandiger Bandpassfilter ausgebildet sein.

Die Kamera 21 wird im vorliegenden Beispiel im Auflichtverfahren betrieben, d.h. es ist eine zusätzliche Beleuchtungsquelle 25 oberhalb des Werkstücks 8 vorgesehen, welche über einen weiteren teildurchlässigen Spiegel 26 Beleuchtungsstrahlung 27 koaxial zur Laserstrahlachse 22 in den Strahlengang einkoppelt. Als zusätzliche Beleuchtungsquelle 25 können Laserdioden oder Diodenlaser vorgesehen werden, die wie in Fig. 2 gezeigt koaxial, aber auch off-axis zur Laserstrahlachse 22 angeordnet werden können. Die zusätzliche Beleuchtungsquelle 25 kann beispielsweise auch außerhalb (insbesondere neben) dem Laserbearbeitungskopf 4 angeordnet und auf das Werkstück 8 gerichtet sein; alternativ kann die Beleuchtungsquelle 25 innerhalb des Laserbearbeitungskopfs 4 angeordnet sein, jedoch nicht koaxial zum Laserstrahl 6 auf das Werkstück 8 gerichtet sein. Es versteht sich, dass die Vorrichtung 14 auch ohne eine zusätzliche Beleuchtungsquelle 25 betrieben werden kann.

Bei dem in Fig. 2 dargestellten Beispiel nimmt die Kamera 21 während eines Laser-Brennschneidprozesses ein Bild B eines zu überwachenden Bereichs 28 des Werkstücks 8 auf, welcher den Wechselwirkungsbereich 18 enthält. Während des Schneidprozesses erfolgt eine Relativbewegung zwischen dem Werkstück 8 und dem Laserbearbeitungskopf 4 durch die Bewegung des Laserbearbeitungskopfs 4 entlang der positiven Y-Richtung (vgl. Pfeil) mit der als Vorschubgeschwindigkeit V bezeichneten Relativgeschwindigkeit. Bei dem Schneidprozess bildet sich im Vorlauf zum Wechselwirkungsbereich 18 eine Schneidfront 29 aus, an die sich im Nachlauf (in negativer Y-Richtung) die Schnittfuge 9 anschließt.

Die Bilderfassungseinrichtung 21 in Form der Kamera steht mit einer Auswerteeinrichtung 30 in signaltechnischer Verbindung. Die Auswerteeinrichtung 30 ist konfiguriert bzw. programmiert, anhand der Auswertung des aufgenommenen Bildes B bzw. einer zeitlichen Abfolge von Bildern B des zu überwachenden Bereichs 28 mindestens eine Störung des Bearbeitungsprozesses, beispielsweise einen Schnittabriss, zu erkennen.

Zu diesem Zweck nimmt die Auswerteeinrichtung 30 eine Auswertung des Bildes B bzw. einer Serie von nacheinander aufgenommenen Bildern B des Wechselwirkungsbereichs 18 vor, um Merkmale des Wechselwirkungsbereichs 18 zu extrahieren bzw. zu identifizieren, die auf eine Störung des Schneidprozesses hindeuten.

**Fig. 3a** zeigt ein Beispiel für das Bild B eines Wechselwirkungsbereichs 18 bei einem Gutschnitt, d.h. bei einem ungestörten Schneidprozess. Wie in Fig. 3a zu erkennen ist, weist der Wechselwirkungsbereich 18 eine vergleichsweise geringe Länge L entlang der Vorschubrichtung V auf, die im gezeigten Beispiel ungefähr der doppelten Breite des Wechselwirkungsbereichs 18 quer zur Vorschubrichtung V entspricht. Die Länge L des Wechselwirkungsbereichs 18 in Vorschubrichtung V wird von der Auswerteeinrichtung 30 durch einen Vergleich der ortsabhängigen Intensität I innerhalb des Bildes B mit einem Intensitätsschwellwert bestimmt. Der Intensitätsschwellwert bei der Längenmessung kann beispielsweise in Form eines Quotienten aus einer mittleren Intensität einer Prozesslicht-Region-of-Interest (Rol) B_{ROI} und einem Gewichtungsfaktor berechnet werden. Bei der Prozesslicht-Region-of-Interest B_{ROI} handelt es sich im gezeigten Beispiel um einen rechteckigen Teilbereich des Bildes B des zu überwachenden Bereichs 28 des Werkstücks 8. Die Ausprägung der Prozesslicht-Region-of-Interest B_{ROI} reicht - bei einer Aufnahme des Bildes B durch eine Bearbeitungsdüse 16 hindurch - in Vorschubrichtung V von der Schneidfront 29 bis an den Düsenrand 16a einer Düsenöffnung 16b der Bearbeitungsdüse 16. Quer zur Vorschubrichtung V erstreckt sich die Prozesslicht-Region-of-Interest über die gesamte Breite des Wechselwirkungsbereichs 18.

Aus der Länge L des Wechselwirkungsbereichs 18 in Vorschubrichtung V kann eine Kenngröße gebildet werden, die mit einem Schwellwert S verglichen wird, der eine Schnittabrissschwelle definiert. Nachfolgend wird zur Vereinfachung davon ausgegangen, dass die Länge L des Wechselwirkungsbereichs 18 selbst die Kenngröße bildet. Ist die Kenngröße, im gezeigten Beispiel die Länge L des Wechselwirkungsbereichs 18 kleiner als der Schwellwert S, wie dies in Fig. 3a der Fall ist, wird von der Auswerteeinrichtung 30 kein Schnittabriss erkannt. Der Schwellwert S, bei dem üblicherweise noch kein Schnittabriss vorliegt, kann vor dem Schneidprozess experimentell bestimmt werden. Es ist auch möglich, dass es sich bei dem Schwellwert S nicht um einen Absolutwert sondern um eine prozentuale Änderung eines aktuellen/definierten Arbeitspunktes der Kenngröße handelt. In diesem Fall wird die anhand des Bildes bestimmte Kenngröße in Beziehung zu einer aktuell vorgegebenen Kenngröße gesetzt. Zu diesem Zweck kann beispielsweise ein Quotient aus dem anhand des Bildes bestimmten Kenngröße (hier: L) und der Kenngröße am Arbeitspunkt gebildet werden. Der Quotient wird dann mit dem Schwellwert verglichen.

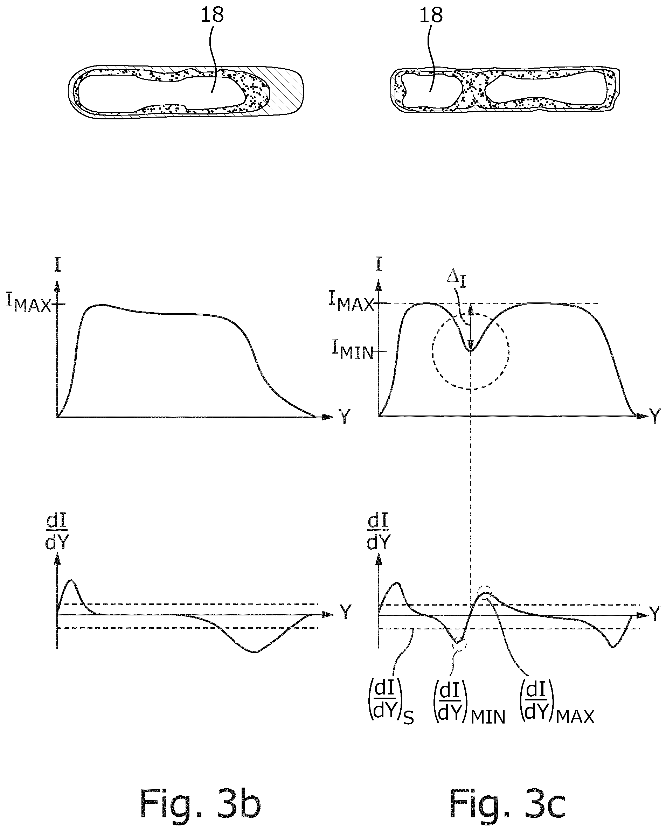

Für das Erkennen eines Schnittabrisses durch die Auswerteeinrichtung 30 ist es nicht ausreichend, wenn die Kenngröße bzw. die Länge L des Wechselwirkungsbereichs 18 größer als der Schwellwert S ist, da in diesem Fall zwar ein Schnittabriss vorliegen kann, die Überschreitung des Schwellwerts S aber auch durch andere Störungen des Schneidprozesses hervorgerufen werden kann, wie nachfolgend anhand von **Fig. 3b** und **Fig. 3c** erläutert wird.

Fig. 3b zeigt das Bild des Wechselwirkungsbereichs 18 beim Vorliegen eines Schnittabrisses sowie einen Intensitätsverlauf I(Y) entlang der Vorschubrichtung V, die im gezeigten Beispiel der Y-Richtung entspricht, sowie den Gradienten dI / dY des Intensitätsverlaufs I(Y). Wie in Fig.3b zu erkennen ist, weist der Wechselwirkungsbereich 18 eine deutlich größere Länge L auf als dies bei dem in Fig. 3a gezeigten Gutschnitt der Fall ist, d.h. der Schwellwert S der Länge L des Wechselwirkungsbereichs 18 wird überschritten. Der Schwellwert S der Länge L des Wechselwirkungsbereichs 18 wird aber auch überschritten, wenn beim Schneidprozess ein Auflagesteg 7 überfahren wird, wie dies in Fig. 3c anhand eines entsprechenden Bildes B des Wechselwirkungsbereichs 18 dargestellt ist. Anhand der Kenngröße in Form der Länge L des Wechselwirkungsbereichs 18 allein kann daher nicht zwischen einem realen Schnittabriss, wie er in Fig. 3b dargestellt ist, und einem Pseudo-Schnittabriss, wie er in Fig. 3c dargestellt ist, unterschieden werden.

Eine solche Unterscheidung kann jedoch anhand des Intensitätsverlaufs I(Y) innerhalb des Wechselwirkungsbereichs 18 entlang der Vorschubrichtung V bzw. des Gradienten dI/dY des Intensitätsverlaufs I(Y) entlang der Vorschubrichtung Y getroffen werden, wie sie in Fig. 3b und in Fig. 3c unten dargestellt sind. Bei dem in Fig. 3b gezeigten Intensitätsverlauf I(Y) tritt kein lokaler Intensitätsabfall ΔI bzw. keine Unstetigkeit innerhalb des Wechselwirkungsbereichs 18 auf, d.h. es tritt kein lokales Intensitätsminium I_{MIN} auf, wie dies in Fig. 3c der Fall ist. Wie in Fig. 3c zu erkennen ist, tritt das lokale Intensitätsminimum I_{MIN} bzw. der Intensitätsabfall ΔI an einer Stelle entlang der Vorschubrichtung V auf, an der bei dem in Fig. 3a gezeigten Wechselwirkungsbereich 18 bei einem ungestörten Schneidprozess ungefähr das Ende des Wechselwirkungsbereichs 18 zu erwarten sein würde. Diese Tatsache erleichtert es, mittels geeigneter Bildauswertealgorithmen das Auftreten des Intensitätsabfalls ΔI bzw. die Unstetigkeit in dem Intensitätsverlauf I(Y) in Echtzeit zu erkennen.

Das Vorhandensein des lokalen Intensitätsabfalls ΔI wird im gezeigten Beispiel von der Auswerteeinrichtung 30 detektiert, wenn sowohl ein lokales Minimum (dI/dY)_{MIN} des Gradienten dl /dY als auch ein lokales Maximum (dI / dY)_{MAX} des Gradienten dl / dY des Intensitätsverlaufs I(Y) einen in Fig. 3b,c gestrichelt dargestellten (absoluten) Schwellwert (dl / dY)s überschreiten. Der Schwellwert (dl / dY)s kann experimentell bestimmt oder in Abhängigkeit vom momentanen Arbeitspunkt festgelegt werden. Eine Detektion des Vorliegens bzw. des Fehlens des lokalen Intensitätsabfalls ΔI durch eine Auswertung des Gradienten dl / dY hat sich als günstig erwiesen.

Das Auftreten des Intensitätsabfalls ΔI kann alternativ von der Auswerteeinrichtung 30 detektiert werden, wenn der Wert des Intensitätsminimums I_{MIN} einen vorgegebenen prozentualen Anteil, beispielsweise weniger als 80%, einer maximalen Intensität I_{MAX} des Intensitätsverlaufs I(Y) in dem Wechselwirkungsbereich 30 unterschreitet, d.h. wenn der lokale Intensitätsabfall ΔI bei mindestens 20% der maximalen Intensität I_{MAX} liegt. Es ist auch möglich, das weiter oben beschriebene Kriterium für das Vorhandensein des Intensitätsabfalls ΔI anhand des Gradienten dl / dY mit dem hier beschriebenen Kriterium zu kombinieren. Beispielsweise kann das hier beschriebene Kriterium zur Plausibilitätsprüfung des weiter oben beschriebenen Kriteriums dienen.

Wird von der Auswerteeinrichtung 30, bei der es sich beispielsweise um einen Computer bzw. um eine geeignete Hard- und/oder Software z.B. in Form eines ASICs, FPGAs, etc. handeln kann, über eine vorgegebene (kurze) Wegstrecke, z.B. in der Größenordnung von ca. 10 mm, das Fehlen des lokalen Intensitätsabfalls ΔI innerhalb des Wechselwirkungsbereichs 18 detektiert und ist der Schwellwert S der Kenngröße bzw. der Länge L des Wechselwirkungsbereichs 18 überschritten, wird von der Auswerteeinrichtung 30 ein Schnittabriss erkannt.

Wie in Fig. 2 zu erkennen ist, steht die Auswerteeinrichtung 30 mit einer Steuer- bzw. Regeleinrichtung 31 in signaltechnischer Verbindung, welche den Laserschneidprozess steuert bzw. regelt. Beim Vorliegen eines Schnittabrisses, der von der Auswerteeinrichtung 30 erkannt wird, kann die Steuer-/Regeleinrichtung 31 die Schneidparameter des Laserschneidprozesses geeignet anpassen, um einer Fortsetzung des Schnittabrisses bei der weiteren Durchführung des Laserschneidprozesses entgegen zu wirken. Es ist alternativ aber auch möglich, dass die Steuer- bzw. Regeleinrichtung 31 den Schneidprozess beim Erkennen des Schnittabrisses abbricht oder ggf. den Schneidprozess neu anfährt, um die betroffene Stelle nochmals zu bearbeiten und das Werkstück 8 in dem vom Schnittabriss betroffenen Bereich vollständig durchzuschneiden, oder dass die Steuer-/Regeleinrichtung 31 eine Information über den Schnittabriss an einen Bediener ausgibt.

Anhand von Merkmalen des Wechselwirkungsbereichs 18 können neben prozessbedingten Störungen wie einem Schnittabriss auch positionsabhängige Störungen 37 und/oder winkelabhängige Störungen 38 des Schneidprozesses erkannt werden (vgl. Fig. 1). Beispielsweise kann beim (insbesondere mehrmaligen) Detektieren eines lokalen Intensitätsabfalls ΔI an einer (bzw. an ein- und derselben) Bearbeitungsposition B_{X,Y} der Werkstückauflage 5 dieser Bearbeitungsposition B_{X,Y} eine positionsabhängige Störung 37 des Bearbeitungsprozesses in Form eines Auflagestegs 7 oder ggf. einer lokalen Verschmutzung des Auflagestegs 7 (Hotspot) zugeordnet werden. Die jeweilige Bearbeitungsposition B_{X,Y} kann einem jeweiligen aufgenommenen Bild B anhand der zugehörigen Maschinenkoordinaten X, Y, Z der Bewegungseinrichtung 12 bei der Aufnahme des Bildes B zugeordnet werden.

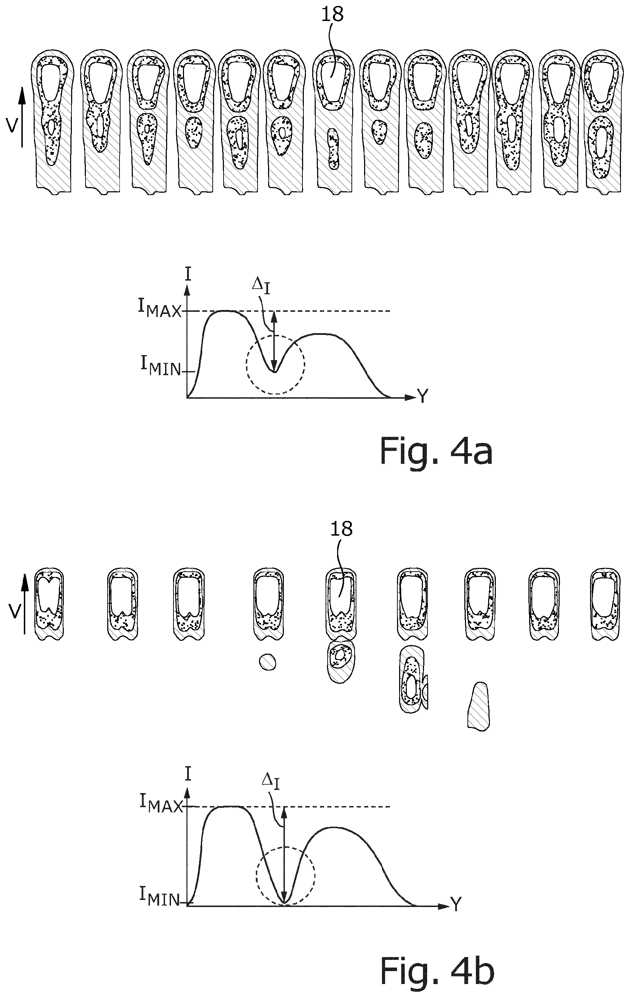

Wie anhand von **Fig. 4a****,b** zu erkennen ist, kann anhand des Betrags bzw. der Größe des lokalen Intensitätsabfalls ΔI entlang des Intensitätsverlaufs I(Y) und/oder anhand des Gradienten dl / dY des Intensitätsverlaufs I(Y) der Grad bzw. die Stärke der positionsabhängigen Störung bestimmt werden: Bei dem in Fig. 4a gezeigten Beispiel beträgt der lokale Intensitätsabfall ΔI ca. 65% des maximalen Intensitätswerts I_{MAX} des Intensitätsverlaufs I(Y), während bei dem in Fig. 4b gezeigten Beispiel der lokale Intensitätsabfall ΔI bei mehr als ca. 95% des maximalen Intensitätswerts I_{MAX} liegt. Bei dem in Fig. 4a gezeigten Beispiel liegt ein (ggf. nur lokal) stark verschmutzter Auflagesteg 7 vor, während bei dem in Fig. 4b gezeigten Beispiel ein praktisch nicht verschmutzter Auflagesteg 7 vorliegt. Anhand der Größe des Intensitätsabfalls ΔI kann somit von der Auswerteeinrichtung 30 auf den Verschmutzungsgrad des Auflagestegs 7 geschlossen werden.

Zur Bestimmung der Stärke der positionsabhängigen Störung kann auch der in Fig. 4a,b nicht bildlich dargestellte Gradient dl /dY des Intensitätsverlaufs I(Y) ausgewertet werden, wie dies in Zusammenhang mit Fig. 3b,c beschrieben wurde. In diesem Fall kann der Grad bzw. die Stärke der Störung beispielsweise anhand des Absolutwerts eines lokalen Minimums (dI/dY)_{MIN} des Gradienten dI /dY bzw. des Absolutwerts eines lokales Maximums (dI / dY)_{MAX} des Gradienten dI / dY des Intensitätsverlaufs I(Y) bestimmt werden.

Der in Fig. 4a gezeigte Intensitätsverlauf I(Y) kann grundsätzlich auch durch eine andere Art von Störung hervorgerufen werden, beispielsweise durch ein Doppelblech. Wird der Intensitätsabfall ΔI jedoch mehrmals an ein- und derselben Bearbeitungsposition B_{X,Y} detektiert, ist davon auszugehen, dass sich an dieser Bearbeitungsposition B_{X,Y} ein Auflagesteg 7 befindet.

Anhand der Auswertung einer Mehrzahl von zeitlich aufeinander folgenden Bildern B des Wechselwirkungsbereichs 18, wie diese beispielsweise in Fig. 4a,b dargestellt sind, kann daher auf die Art der Störung des Bearbeitungsprozesses geschlossen werden, beispielsweise auf das Vorliegen eines Auflagesteges oder eines Doppelblechs.

Das weiter oben beschriebene Verfahren zum Erkennen von Störungen bei einem Bearbeitungsprozess ist nicht auf einen Schneidprozess beschränkt, sondern kann auch bei andren Bearbeitungsprozessen, beispielsweise bei Schweißprozessen, eingesetzt werden. Auch kann an Stelle eines Laserstrahls 6 eine andere Art von Bearbeitungsstrahl, beispielsweise ein Plasmastrahl, zum Einsatz kommen. In diesem Fall wird an Stelle eines Laserbearbeitungskopfs ein Plasmakopf als Bearbeitungswerkzeug 4 eingesetzt.

## Patentansprüche

1. Verfahren zum Erkennen mindestens einer Störung bei einem Bearbeitungsprozess umfassend:
Bearbeiten eines Werkstücks (8) unter Bewegen eines Bearbeitungswerkzeugs und des Werkstücks (8) relativ zueinander,
Aufnehmen eines Bildes (B) eines zu überwachenden Bereichs (28) an dem Werkstück (8), der einen Wechselwirkungsbereich (18) des Bearbeitungswerkzeugs mit dem Werkstück (8) umfasst, sowie Auswerten des Bildes (B) des zu überwachenden Bereichs (28) zum Erkennen der mindestens einen Störung bei dem Bearbeitungsprozess,
wobei zum Erkennen der Störung beim Auswerten des Bildes (B) das Vorhandensein oder das Fehlen eines lokalen Intensitätsabfalls (ΔI) eines Intensitätsverlaufs (I) innerhalb des Wechselwirkungsbereichs (18) entlang einer Vorschubrichtung (V) des Bearbeitungsprozesses detektiert wird,
**dadurch gekennzeichnet, dass**
das Detektieren des lokalen Intensitätsabfalls (ΔI) an einer Bearbeitungsposition (B_{X,Y}) einer positionsabhängigen Störung des Bearbeitungsprozesses an der Bearbeitungsposition (B_{X,Y}) zugeordnet wird.

2. Verfahren nach Anspruch 1, bei dem ein Schnittabriss als Störung beim schneidenden Bearbeiten des Werkstücks (8) nur für den Fall erkannt wird, dass das Fehlen des lokalen Intensitätsabfalls (ΔI) innerhalb des Wechselwirkungsbereichs (18) detektiert wird.

3. Verfahren nach Anspruch 1 oder 2, bei dem zum Erkennen der Störung beim Auswerten des Bildes (B) mindestens ein Geometriemerkmal des Wechselwirkungsbereichs (18) detektiert wird.

4. Verfahren nach Anspruch 3, bei dem ein Schnittabriss beim schneidenden Bearbeiten erkannt wird, wenn eine von der Länge (L) des Wechselwirkungsbereichs (18) entlang der Vorschubrichtung (V) abhängige Kenngröße einen Schwellwert (S) überschreitet, und wenn das Fehlen des lokalen Intensitätsabfalls (ΔI) innerhalb des Wechselwirkungsbereichs (18) detektiert wird.

5. Verfahren nach einem der vorhergehenden Ansprüche, bei dem das Detektieren des lokalen Intensitätsabfalls (ΔI) an einer Bearbeitungsposition (B_{X,Y}) einem Vorhandensein eines Auflagestegs (7) an der Bearbeitungsposition (B_{X,Y}) zugeordnet wird.

6. Verfahren nach einem der vorhergehenden Ansprüche, bei dem anhand des Intensitätsverlaufs (I(Y)) ein Grad der positionsabhängigen Störung bestimmt wird.

7. Verfahren nach Anspruch 6, bei dem anhand eines Gradienten des Intensitätsverlaufs (I(Y)) ein Grad der positionsabhängigen Störung bestimmt wird.

8. Verfahren nach einem der vorhergehenden Ansprüche, bei dem anhand der Auswertung einer Mehrzahl von zeitlich aufeinander folgenden Bildern (B) des Wechselwirkungsbereichs (18) auf die Art der Störung des Bearbeitungsprozesses geschlossen wird.

9. Bearbeitungsmaschine (1), umfassend:
ein Bearbeitungswerkzeug zur Bearbeitung eines Werkstücks (8),
eine Bewegungseinrichtung (12) zur Bewegung des Bearbeitungswerkzeugs und des Werkstücks (8) relativ zueinander,
eine Bilderfassungseinrichtung (21) zur Aufnahme eines Bildes (B) eines zu überwachenden Bereichs (28) an dem Werkstück (8), der einen Wechselwirkungsbereich (18) des Bearbeitungswerkzeugs mit dem Werkstück (8) umfasst, sowie
eine Auswerteeinrichtung (30), die konfiguriert ist, anhand der Auswertung des Bildes (B) des zu überwachenden Bereichs (28) mindestens eine Störung des Bearbeitungsprozesses zu erkennen, wobei die Auswerteeinrichtung (30) konfiguriert ist, zum Erkennen der Störung beim Auswerten des Bildes (B) das Vorhandensein oder das Fehlen eines lokalen Intensitätsabfalls (ΔI) eines Intensitätsverlaufs (I) innerhalb des Wechselwirkungsbereichs (18) entlang einer Vorschubrichtung (V) des Bearbeitungsprozesses zu detektieren,
**dadurch gekennzeichnet,**
**dass** die Auswerteeinrichtung (30) konfiguriert ist, das Detektieren des lokalen Intensitätsabfalls (ΔI) an einer Bearbeitungsposition (B_{X,Y}) einer positionsabhängigen Störung des Bearbeitungsprozesses an der Bearbeitungsposition (B_{X,Y}) zuzuordnen.

10. Bearbeitungsmaschine nach Anspruch 9, bei der die Auswerteeinrichtung (30) konfiguriert ist, einen Schnittabriss als Störung beim schneidenden Bearbeiten des Werkstücks (8) nur für den Fall zu erkennen, dass das Fehlen des lokalen Intensitätsabfalls (ΔI) innerhalb des Wechselwirkungsbereichs (18) detektiert wird.

11. Bearbeitungsmaschine nach Anspruch 9 oder 10, bei welcher die Auswerteeinrichtung (30) konfiguriert ist, zum Erkennen der Störung beim Auswerten des Bildes (B) mindestens ein Geometriemerkmal des Wechselwirkungsbereichs (18) zu detektieren.

12. Bearbeitungsmaschine nach Anspruch 11, bei der die Auswerteeinrichtung (30) konfiguriert ist, einen Schnittabriss beim schneidenden Bearbeiten zu erkennen, wenn eine von der Länge (L) des Wechselwirkungsbereichs (18) abhängige Kenngröße einen Schwellwert (S) überschreitet und wenn das Fehlen des lokalen Intensitätsabfalls (ΔI) innerhalb des Wechselwirkungsbereichs (18) detektiert wird.

13. Bearbeitungsmaschine nach einem der Ansprüche 9 bis 12, bei der die Auswerteeinrichtung (30) konfiguriert ist, das Detektieren des lokalen Intensitätsabfalls (ΔI) an einer Bearbeitungsposition (B_{X,Y}) einem Vorhandensein eines Auflagestegs (7) an der Bearbeitungsposition (B_{X,Y}) zuzuordnen.

14. Bearbeitungsmaschine nach einem der Ansprüche 9 bis 13, bei der die Auswerteeinrichtung (30) konfiguriert ist, anhand des Intensitätsverlaufs (I(Y)) einen Grad der positionsabhängigen Störung zu bestimmen.

15. Bearbeitungsmaschine nach Anspruch 14, bei der die Auswerteeinrichtung (30) konfiguriert ist, anhand eines Gradienten (dl / dY) des Intensitätsverlaufs (I(Y)) einen Grad der positionsabhängigen Störung zu bestimmen

16. Bearbeitungsmaschine nach einem der Ansprüche 9 bis 15, bei der die Auswerteeinrichtung (30) konfiguriert ist, anhand der Auswertung einer Mehrzahl von zeitlich aufeinander folgenden Bildern (B) des Wechselwirkungsbereichs (18) auf die Art der Störung des Bearbeitungsprozesses zu schließen.

## Claims

1. A method for recognizing at least one fault in a machining process, comprising:
machining a workpiece (8) by moving a machining tool and the workpiece (8) relative to each other,
capturing an image (B) of an area (28) to be monitored on the workpiece (8), which comprises an interaction area (18) of the machining tool with the workpiece (8), and evaluating the image (B) of the area (28) to be monitored in order to detect at least one fault in the machining process, wherein, for the purpose of recognizing the fault when evaluating the image (B), the presence or absence of a local intensity drop (ΔI) in an intensity profile (I) within the interaction area (18) along a feed direction (V) of the machining process is detected,
**characterized in that**
the detection of the local intensity drop (ΔI) at a machining position (B_{X,Y}) is assigned to a position-dependent fault in the machining process at the machining position (B_{X,Y}).

2. The method according to claim 1, in which a cut-off as a fault during the cutting of the workpiece (8) is only recognized in the event that the absence of the local intensity drop (ΔI) within the interaction area (18) is detected.

3. The method according to claim 1 or 2, in which at least one geometric feature of the interaction area (18) is detected in order to recognize the fault when evaluating the image (B).

4. The method according to claim 3, in which a cut-off during cutting is recognized when a characteristic dependent on the length (L) of the interaction area (18) along the feed direction (V) exceeds a threshold value (S), and when the absence of the local intensity drop (ΔI) within the interaction area (18) is detected.

5. The method according to any of the preceding claims, wherein detecting the local intensity drop (ΔI) at a machining position (B_{X,Y}) is associated with a presence of a support web (7) at the machining position (B_{X,Y}).

6. The method according to one of the preceding claims, in which a degree of position-dependent fault is determined on the basis of the intensity profile (I(Y)).

7. The method according to claim 6, in which a degree of position-dependent fault is determined on the basis of a gradient of the intensity profile (I(Y)).

8. The method according to one of the preceding claims, in which the type of fault in the machining process is inferred on the basis of the evaluation of a plurality of temporally successive images (B) of the interaction area (18).

9. A processing machine (1), comprising:
a machining tool for machining a workpiece (8),
a movement device (12) for moving the machining tool and the workpiece (8) relative to each other,
an image detection device (21) for capturing an image (B) of an area (28) to be monitored on the workpiece (8), comprising an interaction area (18) of the machining tool with the workpiece (8), and
an evaluation device (30) configured to recognize at least one fault in the machining process on the basis of the evaluation of the image (B) of the area (28) to be monitored, wherein the evaluation device (30) is configured to detect the presence or absence of a local intensity drop (ΔI) in an intensity profile (I) within the interaction area (18) along a feed direction (V) of the machining process in order to detect the fault when evaluating the image (B),
**characterized in that**
the evaluation device (30) is configured to assign the detection of the local intensity drop (ΔI) at a machining position (B_{X,Y}) to a position-dependent fault in the machining process at the machining position (B_{X,Y}).

10. The processing machine according to claim 9, in which the evaluation device (30) is configured to recognize a cut-off as a fault during the cutting processing of the workpiece (8) only in the event that the absence of the local intensity drop (ΔI) within the interaction area (18) is detected.

11. The processing machine according to claim 9 or 10, in which the evaluation device (30) is configured to detect at least one geometric feature of the interaction area (18) in order to recognize the fault when evaluating the image (B).

12. The processing machine according to claim 11, in which the evaluation device (30) is configured to recognize a cut-off during cutting when a characteristic dependent on the length (L) of the interaction area (18) exceeds a threshold value (S), and when the absence of the local intensity drop (ΔI) within the interaction area (18) is detected.

13. The processing machine according to one of claims 9 to 12, in which the evaluation device (30) is configured to associate the detection of the local intensity drop (ΔI) at a machining position (B_{X,Y}) with the presence of a support web (7) at the machining position (B_{X,Y}).

14. The processing machine according to one of claims 9 to 13, in which the evaluation device (30) is configured to determine a degree of the position-dependent fault on the basis of the intensity profile (I(Y)).

15. The processing machine according to claim 14, in which the evaluation device (30) is configured to determine a degree of the position-dependent fault on the basis of a gradient (dl / dY) of the intensity profile (I(Y)).

16. The processing machine according to one of claims 9 to 15, in which the evaluation device (30) is configured to infer the type of fault in the machining process on the basis of the evaluation of a plurality of temporally successive images (B) of the interaction area (18).

## Revendications

1. Procédé de reconnaissance d'au moins un défaut dans un processus d'usinage, comprenant :
l'usinage d'une pièce (8) en déplaçant un outil d'usinage et la pièce (8) l'un par rapport à l'autre,
la prise d'une image (B) d'une zone à surveiller (28) sur la pièce (8), qui comprend une zone d'interaction (18) de l'outil d'usinage avec la pièce (8), et
l'évaluation de l'image (B) de la zone à surveiller (28) pour reconnaître ledit au moins un défaut dans le processus d'usinage,
dans lequel la présence ou l'absence d'une chute d'intensité locale (ΔI) d'une courbe d'intensité (I) à l'intérieur de la zone d'interaction (18) selon une direction d'avance (V) du processus d'usinage est détectée pour reconnaître le défaut lors de l'évaluation de l'image (B),
**caractérisé en ce que**
la détection de la chute d'intensité locale (ΔI) à une position d'usinage (B_{X,Y}) est associée à un défaut dépendant de la position dans le processus d'usinage à la position d'usinage (B_{X,Y}).

2. Procédé selon la revendication 1, dans lequel une rupture de coupe est reconnue comme un défaut lors de l'usinage de coupe de la pièce (8) uniquement dans le cas où l'absence de chute d'intensité locale (ΔI) est détectée dans la zone d'interaction (18).

3. Procédé selon la revendication 1 ou 2, dans lequel au moins une caractéristique géométrique de la zone d'interaction (18) est détectée afin de reconnaître le défaut lors de l'évaluation de l'image (B).

4. Procédé selon la revendication 3, dans lequel une rupture de coupe est reconnue lors de l'usinage de coupe quand un paramètre dépendant de la longueur (L) de la zone d'interaction (18) selon la direction d'avance (V) dépasse une valeur seuil (S), et quand l'absence de chute d'intensité locale (ΔI) à l'intérieur de la zone d'interaction (18) est détectée.

5. Procédé selon l'une des revendications précédentes, dans lequel la détection de la chute d'intensité locale (ΔI) à une position d'usinage (B_{X,Y}) est associée à la présence d'une barre de support (7) à la position d'usinage (B_{X,Y}).

6. Procédé selon l'une des revendications précédentes, dans lequel un degré du défaut dépendant de la position est déterminé sur la base de la courbe d'intensité (I(Y)).

7. Procédé selon la revendication 6, dans lequel un degré du défaut dépendant de la position est déterminé sur la base d'un gradient de la courbe d'intensité (I(Y)).

8. Procédé selon l'une des revendications précédentes, dans lequel le type de défaut du processus d'usinage est déterminé sur la base de l'évaluation d'une pluralité d'images (B) temporellement successives de la zone d'interaction (18).

9. Machine d'usinage (1), comprenant :
un outil d'usinage pour usiner une pièce (8),
un dispositif de déplacement (12) pour déplacer l'outil d'usinage et la pièce (8) l'un par rapport à l'autre,
un dispositif de capture d'image (21) pour capturer une image (B) d'une zone à surveiller (28) sur la pièce (8), qui comprend une zone d'interaction (18) de l'outil d'usinage avec la pièce (8), ainsi
qu'un dispositif d'évaluation (30) qui est configuré pour reconnaître au moins un défaut du processus d'usinage sur la base de l'évaluation de l'image (B) de la zone à surveiller (28), dans laquelle le dispositif d'évaluation (30) est configuré pour détecter la présence ou l'absence d'une chute d'intensité locale (ΔI) d'une courbe d'intensité (I) dans la zone d'interaction (18) selon une direction d'avance (V) du processus d'usinage afin de reconnaître le défaut lors de l'évaluation de l'image (B), **caractérisée en ce que**
le dispositif d'évaluation (30) est configuré pour détecter la chute d'intensité locale (ΔI) à une position d'usinage (B_{X,Y}) pour attribuer un défaut dépendant de la position du processus d'usinage à la position d'usinage (B_{X,Y}).

10. Machine d'usinage selon la revendication 9, dans laquelle le dispositif d'évaluation (30) est configuré pour reconnaître une rupture de coupe comme un défaut lors de l'usinage de coupe de la pièce (8) uniquement dans le cas où l'absence de chute d'intensité locale (ΔI) est détectée dans la zone d'interaction (18).

11. Machine d'usinage selon la revendication 9 ou 10, dans laquelle le dispositif d'évaluation (30) est configuré pour détecter au moins une caractéristique géométrique de la zone d'interaction (18) afin de reconnaître le défaut lors de l'évaluation de l'image (B).

12. Machine d'usinage selon la revendication 11, dans laquelle le dispositif d'évaluation (30) est configuré pour reconnaître une rupture de coupe pendant l'usinage de coupe quand un paramètre dépendant de la longueur (L) de la zone d'interaction (18) dépasse une valeur seuil (S) et quand l'absence de chute d'intensité locale (ΔI) à l'intérieur de la zone d'interaction (18) est détectée.

13. Machine d'usinage selon l'une des revendications 9 à 12, dans laquelle le dispositif d'évaluation (30) est configuré pour associer la détection de la chute d'intensité locale (ΔI) à une position d'usinage (B_{X,Y}) à la présence d'une barre de support (7) à la position d'usinage (B_{X,Y}).

14. Machine d'usinage selon l'une des revendications 9 à 13, dans laquelle le dispositif d'évaluation (30) est configuré pour déterminer un degré du défaut dépendant de la position sur la base de la courbe d'intensité (I(Y)).

15. Machine d'usinage selon la revendication 14, dans laquelle le dispositif d'évaluation (30) est configuré pour déterminer un degré du défaut dépendant de la position sur la base d'un gradient (dl / dY) de la courbe d'intensité (I(Y)).

16. Machine d'usinage selon l'une des revendications 9 à 15, dans laquelle le dispositif d'évaluation (30) est configuré pour conclure le type du défaut du processus d'usinage sur la base de l'évaluation d'une pluralité d'images (B) temporellement successives de la zone d'interaction (18).
